# EUROPÄISCHE PATENTSCHRIFT

(11) **EP 2 280 844 B1**
(45) Veröffentlichungstag und Bekanntmachung des Hinweises auf die Patenterteilung: **04.07.2018**
(21) Anmeldenummer: 09753623.9
(22) Anmeldetag: 15.05.2009
(51) Int. Cl.: B60L 13/10

(54) **MAGNETSCHWEBEFAHRZEUG MIT EINER MEHRZAHL VON FÜHR- UND BREMSMAGNETEN**
MAGNETIC LEVITATION VEHICLE WITH A PLURALITY OF DRIVING- AND BRAKING MAGNETS
VEHICULE A SUSTENTATION MAGNETIQUE AVEC UNE PLURALITE D' AIMANTS DE GUIDAGE ET DE FREINAGE

(30) Priorität: 29.05.2008 DE 102008026228
(43) Veröffentlichungstag der Anmeldung: 09.02.2011
(73) Patentinhaber: ThyssenKrupp Transrapid GmbH, 34127 Kassel (DE)
(72) Erfinder: HAHN, Wolfgang, 34125 Kassel (DE)
(74) Vertreter: Lorenz, Bernd Ingo Thaddeus
(86) Internationale Anmeldenummer: PCT/EP2009/003466
(87) Internationale Veröffentlichungsnummer: WO 2009/143968

(56) Entgegenhaltungen:
- DE-A1-102006 042 138
- JP-A- 62 260 502

## Beschreibung

Die Erfindung betrifft ein Magnetschwebefahrzeug der im Oberbegriff des Anspruchs 1 angegebenen Gattung.

Bekannte Magnetschwebefahrzeuge dieser Art (DE 10 2004 013 994 A1, DE 102006 042138 A1 und JP 62 260502) weisen als elektromagnetische Wirbelstrombremsen wirkende Bremsmagnete auf. Diese sind an vorgewählten Positionen des Magnetschwebefahrzeugs montiert und wirken mit am Fahrweg angebrachten, elektrisch und magnetisch leitenden Reaktionsschienen zusammen. Außerdem sind die Magnetschwebefahrzeuge mit Führmagneten ausgerüstet, die mit denselben Reaktions- bzw. Seitenführschienen zusammenwirken (DE 10 2004 056 438 A1). Die Führmagnete sind in einer Mehrzahl von in Fahrzeuglängs-bzw. Fahrtrichtung hintereinander angeordneten Magneteinheiten untergebracht, die in zwei Ebenen je vier, d. h. insgesamt acht Führmagnetspulen aufnehmen können. Diese Anordnung dient insbesondere dem Zweck, die Führmagnetspulen elektrisch paarweise miteinander verbinden und dadurch beim Betrieb des Magnetschwebefahrzeugs weitgehende Redundanz sicherstellen zu können. In einem praktischen Anwendungsfall sind pro Sektion und auf jeder Seite des Fahrzeugs zwei Gruppen von je drei derartigen Magneteinheiten vorhanden, wobei die beiden Gruppen durch einen zwischen ihnen liegenden Bremsmagneten getrennt sind. In den Übergängen zwischen zwei Sektionen können ebenfalls Führmagneteinheiten angeordnet sein. Die Bremsmagnete können sowohl innerhalb als auch zwischen zwei Schwebegestellen des Fahrzeugs angeordnet sein, um die Bremskräfte über diese Schwebegestelle auf einen Wagenkasten des Magnetschwebefahrzeugs zu übertragen.

Ein Nachteil der beschriebenen Konstruktion besteht darin, dass die sonst über die ganze Fahrzeuglänge erstreckte Kette von Führmagneten durch jeden Bremsmagneten unterbrochen wird. Die dadurch bedingten beiden Lastwechsel führen insbesondere bei schnell fahrenden Magnetschwebefahrzeugen zu unerwünschten Momenten und Kräften, die zusätzlich zu den unvermeidbaren, an den Fahrzeugenden auftretenden Lastwechseln vom Fahrweg und/oder vom Fahrzeug aufgenommen werden müssen. Außerdem erfordern die durch die Bremsmagnete bedingten, von Führmagneten freien Zonen vor allem aus Redundanzgründen zusätzliche Maßnahmen, z. B. entweder eine unterschiedliche Gestaltung der an die Bremsmagnete angrenzenden Führmagneteinheiten und/oder die Anbringung von mechanischen Führhilfen (Kufen), die beim Ausfall der in diesen Bereichen liegenden Führmagnete wirksam werden.

Ausgehend davon liegt der Erfindung das technische Problem zugrunde, das Magnetschwebefahrzeug der eingangs bezeichneten Gattung so auszubilden, dass die genannten zusätzlichen Maßnahmen weitgehend vermieden werden können.

Gelöst wird dieses Problem erfindungsgemäß mit den kennzeichnenden Merkmalen des Anspruchs 1.

Die Erfindung bringt insbesondere drei Vorteile mit sich. Da die Bremsmagnetpole ausschließlich der einen und die Führmagnetspulen, mit bevorzugter Ausnahme an den Fahrzeugenden, in der anderen Ebene der Magneteinheiten untergebracht sind, kann die Kette der Führmagnete zwischen den Fahrzeugenden lückenlos, d. h. über die ganze Fahrzeuglänge kontinuierlich ausgebildet werden. Dadurch entfallen die sonst an den Einbauorten der Bremsmagnete auftretenden Lastwechsel. Außerdem können bis auf die Endbereiche durchgehend baugleiche Magneteinheiten vorgesehen werden, was die Herstellungskosten reduziert. Schließlich können die Bremskräfte gleichmäßiger als bisher längs des Fahrzeugs verteilt werden, da die Lage der Bremsmagnete nicht mehr auf den zentralen Bereich des Fahrzeugs beschränkt ist, was sich gleichzeitig vorteilhaft auf die gewünschte Redundanz der Bremskräfte auswirkt.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 eine schematische Seitenansicht eines Teils einer Endsektion eines bekannten, Führ- und Bremsmagnete aufweisenden Magnetschwebefahrzeugs;
Fig. 2 eine der Fig. 1 entsprechende Seitenansicht eines Teils einer Endsektion eines erfindungsgemäßen Magnetschwebefahrzeugs;
Fig. 3 in starker Vereinfachung eine Seitenansicht einer Mittelsektion eines erfindungsgemäßen Magnetschwebefahrzeugs;
Fig. 4 einen vergrößerten Querschnitt durch ein erstes Ausführungsbeispiel einer erfindungsgemäßen Magneteinheit in einem sowohl mit einem Führmagneten als auch mit einem Bremsmagneten versehenen Abschnitt;
Fig. 5 die Vorderansicht eines Teils der Magnetanordnung nach Fig. 4 unter Weglassung einer Seitenführschiene; und
Fig. 6 und 7 den Fig. 4 und 5 entsprechende Ansichten eines zweiten Ausführungsbeispiels der erfindungsgemäßen Magneteinheit.

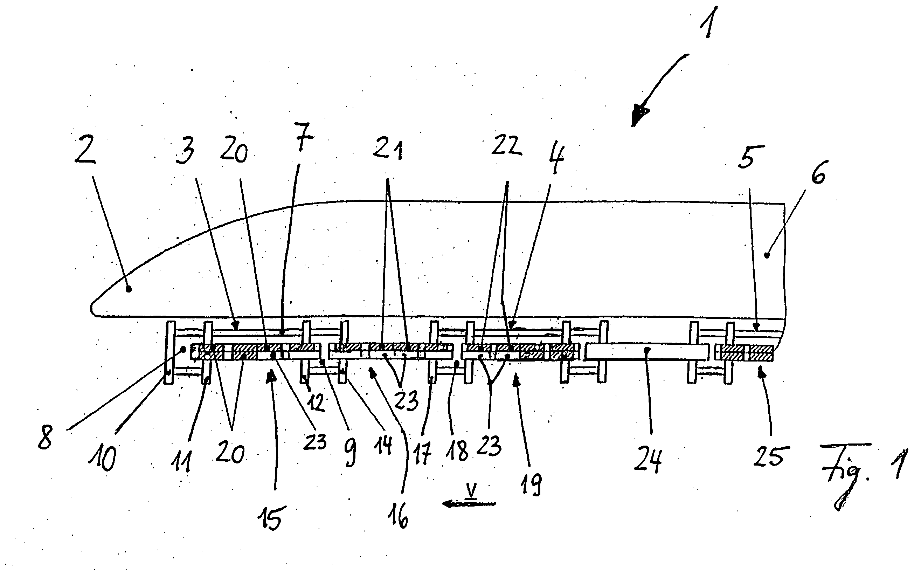

Fig. 1 zeigt einen Teil eines bekannten Magnetschwebefahrzeugs 1 anhand einer ein bugseitiges Ende 2 aufweisenden Endsektion. Eine Längsrichtung des Magnetschwebefahrzeugs 1, die gleichzeitig seine Fahrtrichtung ist, ist durch einen Pfeil v angedeutet.

Weiter sind grob schematisch einige Schwebegestelle 3 bis 5 gezeigt, die in Längsrichtung des Fahrzeugs 1 hintereinander angeordnet und über nicht dargestellte Luftfedern an einen Wagenkasten 6 des Magnetschwebefahrzeugs 1 angekoppelt sind. Das am weitesten vorn liegende Schwebegestell 3 weist in Längsrichtung beabstandete, durch Längsträger 7 verbundene Abstützelemente in Form von Schwebegestellrahmen 8 und 9 auf, die mit je einem vorderen und hinteren Abstützteil 10, 11 bzw. 12, 14 versehen sind. Die darauf folgenden Schwebegestelle 4 und 5 sind entsprechend ausgebildet.

Im Ausführungsbeispiel ist eine in Fahrtrichtung v vorderste Magneteinheit 15 so mit dem Schwebegestell 3 verbunden, dass ihr Vorderende am hinteren Abstützteil 11 des vorderen Schwebegestellrahmens 8 und ihr Hinterende mit dem vorderen Abstützteil 12 des hinteren Schwebegestellrahmens 9 fest verbunden ist. Eine nächste Magneteinheit 16 ist an ihrem Vorderende mit dem hinteren Abstützteil 14 des hinteren Schwebegestellrahmens 9 und an ihrem Hinterende mit einem vorderen Abstützteil 17 eines vorderen Schwebegestellrahmens 18 des in Fahrtrichtung nachfolgenden Schwebegestells 4 jeweils gelenkig verbunden. Eine dritte Magneteinheit 19 ist analog zur ersten Magneteinheit 15 mit dem Schwebegestell 4 fest verbunden. Alle drei Magneteinheiten 15, 16 und 19 sind entsprechend den jeweiligen Bedürfnissen mit schraffiert angedeuteten Führmagnetspulen 20, 21 und 22 versehen. Zu diesem Zweck weist jede Magneteinheit in zwei, hier übereinander liegenden Ebenen je vier dicht hinter und übereinander liegende Einbauplätze 23 für die Führmagnetspulen 20 bis 22 bzw. deren Kerne und Wicklungen auf. Gemäß Fig. 1 sind in den Magneteinheiten 15 und 19 z. B. zwei dieser Einbauplätze 23 unbesetzt, wohingegen in der Magneteinheit 16 jeweils die vier in der unteren Ebene liegenden Einbauplätze unbesetzt sind.

Die beschriebene Anordnung endet an einem Bremsmagneten 24, dessen Länge zweckmäßig der Länge einer Magneteinheit 15, 16, 19 entspricht. In Fahrzeuglängsrichtung v hinter diesem Bremsmagneten 24 schließen sich, beginnend mit einer Magneteinheit 25, entsprechende Magneteinheiten mit spiegelbildlicher Anordnung der Führmagnetspulen an, die bis zum anderen Fahrzeugende reichen. Dadurch ergibt sich eine Kette von Magneteinheiten 15, 16, 19, 25 usw. und in diesen montierten Führmagnespulen 20, 21, 22 usw. die im Bereich des Bremsmagneten 24 unterbrochen ist, so dass dort eine von Führmagneten freie Zone vorliegt, die beim Betrieb des Magnetschwebefahrzeugs 1 die eingangs erwähnten Lastwechsel zur Folge hat.

Wie Fig. 1 weiter zeigt, haben die am bugseitigen Ende 2 des Magnetschwebefahrzeugs 1 liegende Magneteinheit 15 und die an den Bremsmagneten 24 grenzenden Magneteinheiten 19 insgesamt je sechs, auf zwei Ebenen verteilte Führmagnetspulen 20 bzw. 22, während die Magneteinheit 16 nur in einer, hier oberen Ebene mit insgesamt vier Führmagnetspulen 21 versehen ist. Entsprechend ist die Anordnung auf der in Fig. 1 rechts vom Bremsmagneten 24 liegenden, nicht vollständig dargestellten Seite des Magnetschwebefahrzeugs 1 getroffen, wobei nur die an den Bremsmagneten 24 grenzende Magneteinheit 25 angedeutet ist. Dadurch wird erreicht, dass an besonders exponierte, an magnetfreie Zonen angrenzende Bereiche eine größere Anzahl von Führmagnetspulen als an weniger exponierte Bereiche grenzt.

Der in einem mittleren Bereich des Magnetschwebefahrzeugs 1 angeordnete Bremsmagnet 24 ist vorzugsweise als Wirbelstrombremse ausgebildet. Er dient insbesondere dem Zweck, beim Ausfall des auch zum Bremsen verwendbaren Langstator-Linearmotors, mit dem Magnetschwebefahrzeuge 1 der beschriebenen Art in der Regel ausgerüstet sind, ein sicheres Abbremsen und Anhalten des Magnetschwebefahrzeugs 1 zu ermöglichen.

Einzelheiten der beschriebenen Anordnung und deren Vorteile lassen sich insbesondere den Dokumenten DE 10 2004 056 438 A1 und DE 10 2004 013 994 A1 entnehmen, die zur Vermeidung von Wiederholungen hiermit durch Referenz auf sie zum Gegenstand der vorliegenden Offenbarung gemacht werden.

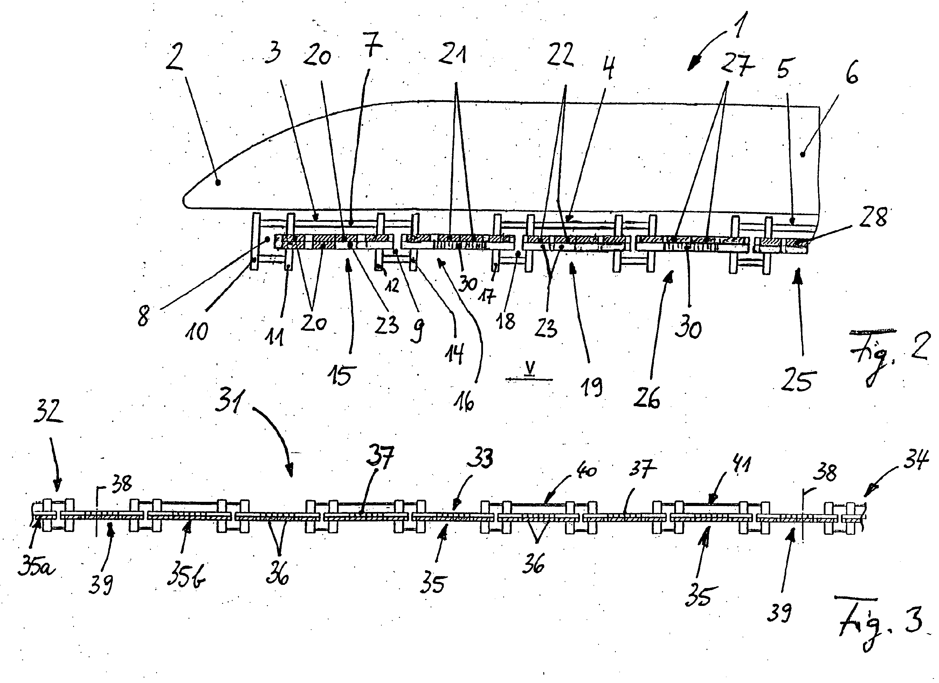

Fig. 2 zeigt schematisch ein erfindungsgemäßes Ausführungsbeispiel eines Führ- und Bremssystems. Im Gegensatz zu Fig. 1 fehlt hier der mittlere Bremsmagnet 24. Stattdessen ist eine weitere, entsprechend Fig. 1 mit den Schwebegestellen 4 und 5 gelenkig verbundene Magneteinheit 26 vorgesehen, die wie die Magneteinheiten 15, 16, 19 und 25 in zwei Ebenen je vier Einbauplätze 23 für Führmagnetspulen 27 aufweist. Von diesen insgesamt acht Einbauplätzen 23 sind nur die in der oberen Ebene liegenden vier Einbauplätze 23 mit den Führmagnetspulen 27 besetzt, während die übrigen Einbauplätze 23 keine Führmagnetspulen 27 aufweisen. Weiter ist erfindungsgemäß vorgesehen, die beiden an die Magneteinheit 26 grenzenden Magneteinheiten 19 und 25 nur in einer, hier in der oberen Ebene mit Führmagnetspulen 22 bzw. 28 zu versehen, so dass auch bei diesen Magneteinheiten 19 und 25 die unteren Einbauplätze 23 von Führmagnetspulen frei sind.

Dadurch wird erreicht, dass zwischen den beiden Magneteinheiten 15, die an den Fahrzeugenden angeordnet sind, ausschließlich Magneteinheiten 16, 19, 26, 25 usw. liegen, die in einer einzigen, hier oberen Ebene an allen vier Einbauplätzen 23 mit Führmagnetspulen 21, 22, 27, 28 besetzt sind. Wenn gleichzeitig die Magneteinheiten 15 am vorderen und hinteren Fahrzeugende zumindest in derselben oberen Ebene vollständig mit den Führmagnetspulen 20 besetzt sind, dann bilden alle diese Führmagnetspulen 20, 21, 22, 27, 28 usw., was besonders bevorzugt wird, eine von vorn bis hinten kontinuierlich durchlaufende Kette von Führmagneten, die bis auf die vergleichsweise schmalen, hier im Wesentlichen unbedeutenden Spalte zwischen den Magneteinheiten keinerlei Lücken aufweist und somit ein durchlaufendes Magnetflussband bildet.

Obwohl die Führmagnetspulen 20, 21, 22, 27, 28 usw. prinzipiell ausschließlich in einer und derselben, hier oberen Ebene der Magneteinheiten 15, 16, 19, 26, 25 usw. angeordnet sein sollten, kann es aus Redundanz- und anderen Gründen zweckmäßig sein, die erste und letzte Magneteinheit 15 auch in der zweiten, hier unteren Einbauebene mit z. B. zwei Führmagnetspulen 20 zu versehen. Alle anderen Magneteinheiten sind dagegen ausschließlich in der oberen Ebene mit Führmagnetspulen belegt.

Da die Führmagnetspulen 20 bis 22, 27, 28 usw. nur in der ersten, oberen Ebene angeordnet sind, ist die zweite, untere Ebene von Einbauplätzen 23 der Magneteinheiten 15, 16, 19, 26, 25 usw. frei. Diese freien Einbauplätze 23 werden erfindungsgemäß für den Einbau von Bremsmagneten 30 benutzt, wie in Fig. 2 für die Magneteinheiten 16 und 26 dargestellt ist. Dadurch wird der Vorteil erzielt, dass auch die Bremsmagnete 30 praktisch über die ganze Fahrzeuglänge verteilt werden können, wodurch sich die Bremskräfte nahezu gleichmäßig auf die ganze Fahrzeuglänge verteilen und die lokal auf die Seitenführschienen ausgeübten Lasten stark reduzieren lassen. Da außerdem die Magneteinheiten 15, 16, 19, 25 usw. und ihre Einbauplätze 23, wie Fig. 1 zeigt, bei bekannten Magnetschwebefahrzeugen ohnehin bereits vorhanden sind, dort aber teilweise leer bleiben, bringt die Montage der Bremsmagnete 30 in den freien Einbauplätzen 23 auch keinen wesentlichen konstruktiven Mehraufwand mit sich. Außerdem führt die Erfindung zu einer höheren funktionalen Redundanz, da anstelle eines einzigen, mittleren Bremsmagneten 24 (Fig. 1) jetzt mehrere kleine Bremsmagnete 30 (Fig. 2) vorhanden sind. Der durch die mehreren Bremsmagnete 30 verursachte Mehraufwand an Verkabelung kann in Kauf genommen werden, zumal er durch den reduzierten Aufwand für die Verkabelung der Führmagnetspulen 22 im Bereich der zentralen Bremsmagnete 24 und den Wegfall der Verkabelung des zentralen Bremsmagneten 24 (Fig. 1) zumindest teilweise kompensiert wird.

Im Übrigen können die Bremsmagnete 30 in bekannter Weise aus abwechselnd durch Nord- und Südpole gebildeten Elektromagneten bestehen (DE 10 2004 013 994 A1), alternativ aber auch zumindest teilweise mit Permanentmagneten versehen sein (vgl. z. B. die noch unveröffentlichten Patentanmeldungen derselben Anmelderin DE 10 2007 025 793.8 und DE 10 2007 034 939.6). Außerdem können die Bremsmagnete an sich beliebige Bauformen aufweisen und auch mit Klauenpolanordnungen versehen sein.

Während Fig. 2 die erfindungsgemäße Gestaltung der Führ- und Bremsmagnete in einem Magnetschwebefahrzeug 1 zeigt, das als eine Endsektion mit einem bugseitigen Ende 2 ausgebildet ist, zeigt Fig. 3 schematisch ein Magnetschwebefahrzeug 31 mit einer vorderen Endsektion 32, einer Mittelsektion 33 und einer hinteren Endsektion 34, wobei das Magnetschwebefahrzeug 31 sowohl in Richtung des Pfeils v als auch entgegengesetzt dazu fahren kann. Während die Endsektionen 32 und 34 vorzugsweise wie das Magnetschwebefahrzeug 1 nach Fig. 2 ausgebildet sind, enthält die Mittelsektion 33 vorzugsweise identisch ausgebildete Magneteinheiten 35. Diese sind z. B. wie die Magneteinheiten 16 und 26 in Fig. 2, jedoch im Ausführungsbeispiel mit dem Unterschied ausgebildet, dass hier Führmagnetspulen 36 ausschließlich in der unteren und Bremsmagnete 37 ausschließlich in der oberen Ebene der Einbauplätze angeordnet sind. Entsprechendes gilt in Fig. 3 für die Führ- und Bremsmagnete der vorderen und hinteren Endsektionen 32 und 34. Dadurch soll angezeigt werden, dass die Ebenen, in denen die Führ- bzw. Bremsmagnete jeweils angeordnet sind, entsprechend den Bedürfnissen des Einzelfalls gewählt werden können.

Weiterhin zeigt Fig. 3, dass in der Mittelsektion 33 vorzugsweise alle Einbauplätze der unteren Ebene mit Führmagnetspulen 36 belegt sind, so dass diese wiederum ein durchgehendes Magnetflussband bilden. Außerdem sind hier alle Magneteinheiten 35 mit wenigstens je einem Bremsmagneten 37 besetzt. Damit ist es möglich, alle Magneteinheiten des gesamten Fahrzeugs identisch auszubilden, ausgenommen die an den bugseitigen Enden 2 (Fig. 2) befindlichen Magneteinheiten 15, falls dies aus Redundanz und anderen Gründen, z. B. aus Gründen der Lastanforderungen, zweckmäßig ist.

Ist es erwünscht, zwischen den beiden Endsektionen 32, 34 nach Fig. 3 weitere Mittelsektionen vorzusehen, werden deren Führ- und Bremsmagneteinheiten zweckmäßig sämtlich wie die Magneteinheiten 35 der Mittelsektion 33 ausgebildet.

Um auch in durch senkrechte Linien (Fig. 3) angedeuteten Übergangsbereichen 38 zwischen zwei Sektionen keine Unterbrechung des aus den Führmagneten gebildeten Magnetflussbandes zu erhalten, sind dort nach einem derzeit für am besten gehaltenen Ausführungsbeispiel vorzugsweise weitere Magneteinheiten 39 angeordnet, die z. B. wie die Magneteinheiten 35 ausgebildet sind. Aus diesem Grund können an den an diese Übergangsbereiche 38 grenzenden Enden der betreffenden Sektionen ohne weiteres auch Magneteinheiten vorgesehen werden (z. B. 35a, 35b), deren Führmagnetspulen 36 in einer Ebene angeordnet sind, d. h. den Magneteinheiten 15 (Fig. 1 und 2) entsprechende Magneteinheiten können hier vermieden werden (vgl. auch DE 10 2004 056 438 A1).

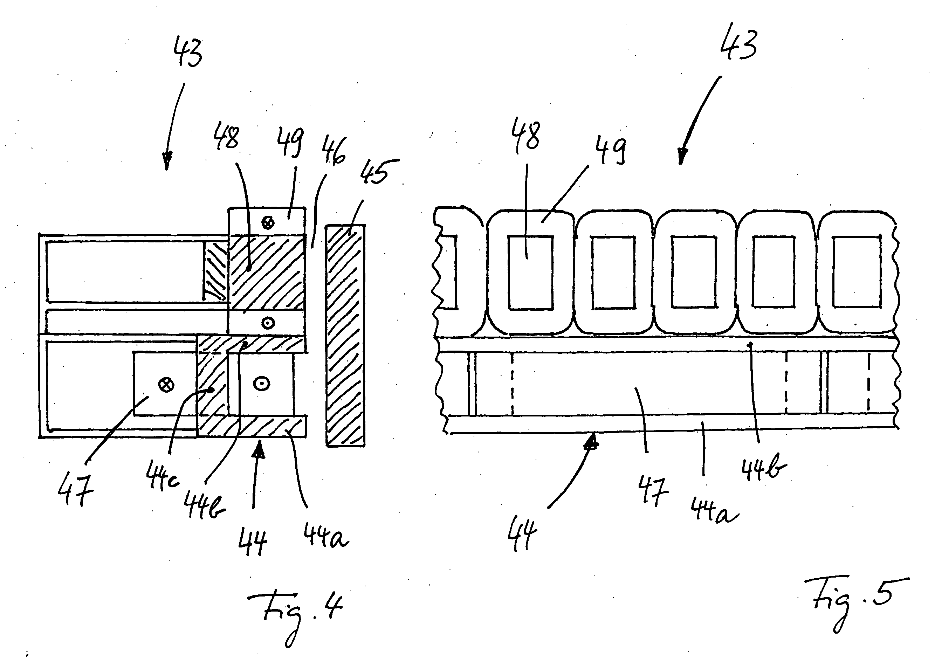

Die Zahl und die Anordnung der Bremsmagnete 30, 37 kann unterschiedlich gewählt werden. Während die Bremsmagnete 30 in Fig. 2 nur in den zwischen zwei Schwebegestellen 3, 4 bzw. 4, 5 montierten Magneteinheiten 16, 36 vorgesehen sind, zeigt Fig. 3, dass die Bremsmagnete 37 auch nur innerhalb eines Schwebegestells (z. B. 40) oder sowohl innerhalb der Schwebegestelle als auch zwischen zwei Schwebegestellen (z. B. 40, 41) angeordnet sein können. Außerdem können die Bremsmagnete 30, 37 an ausgewählten oder auch an allen vorhandenen Einbauplätzen 23 der verschiedenen Magneteinheiten angebracht werden. Insoweit ist jede zweckmäßige Kombination möglich. Ein erstes Ausführungsbeispiel für die Ausbildung und Anordnung einer erfindungsgemäßen, sowohl mit Führmagneten als auch mit Bremsmagneten ausgebildeten Magneteinheit 43 ist schematisch in Fig. 4 und 5 dargestellt.

Die Magneteinheit 43 enthält in einer unteren Ebene mehrere, in Längs- und Fahrtrichtung des Magnetschwebefahrzeugs erstreckte, im Querschnitt z. B. U-förmige Kerne 44 mit zwei Schenkeln 44a und 44b, deren freie Stirnflächen in einer Ebene liegen, die einen zwischen der Magneteinheit 43 und einer Seitenführschiene 45 liegenden Führspalt 46 definiert. Je ein die Schenkel 44a und 44b verbindendes Stegteil 44c der Kerne 44 ist mit einer Spule 47 umwickelt, die eine der oben erläuterten Führmagnetspulen 20 bis 22, 27, 28, 36 bildet. Insoweit entspricht die untere Ebene der Magneteinheit 43 der unteren Ebene von üblichen, normalerweise in zwei Ebenen mit Führmagnetspulen versehenen Magnetanordnungen (z. B. DE 10 2004 056 438 A1, Fig. 4 und 5). Dagegen weist die Magneteinheit 43 in einer oberen Ebene eine Mehrzahl von in Längs- bzw. Fahrtrichtung aufeinander folgenden, vorzugsweise durch einen Polrücken miteinander verbundenen Magnetpolen auf, die je einen Kern 48 und eine diesen umgebende Wicklung 49 enthalten. Die verschiedenen Wicklungen 49 sind elektrisch in Reihe geschaltet und so an eine Gleichstromquelle angeschlossen, daß sich abwechselnd magnetische Nord- und Südpole ergeben. In der oberen Ebene entspricht die Magneteinheit 43 daher im wesentlichen einem üblichen Bremsmagneten (z. B. DE 10 2004 013 994 A1, Fig 3).

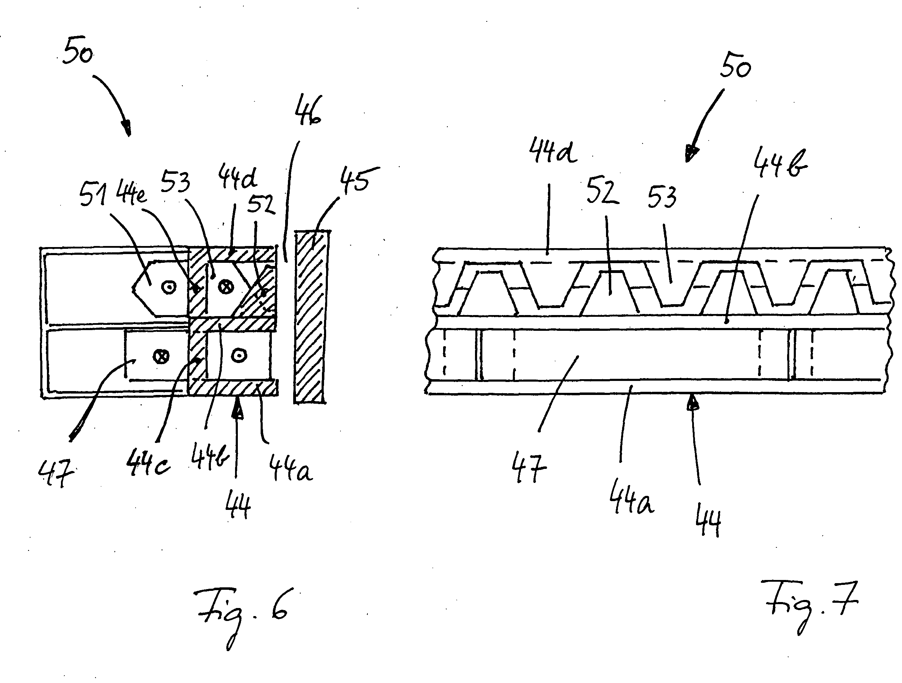

Nach einem zweiten Ausführungsbeispiel gemäß Fig. 6 und 7 ist eine erfindungsgemäße Magneteinheit 50 in der unteren Ebene analog zu Fig. 4 und 5 ausgebildet, während ein in der oberen Ebene angeordneter Bremsmagnet aus Klauenpolen gebildet ist. Zu diesem Zweck ist der Kern 44 im Querschnitt E-förmig ausgebildet, wobei die beiden unteren Schenkel 44a, 44b und die Spulen 47 entsprechend Fig. 4 und 5 ausgebildet sind, während ein dritter Schenkel 44d, bezogen auf eine Mittelebene des Kerns 44, spiegelsymetrisch zum Schenkel 44a angeordnet ist. Ein wie das Stegteil 44c in Längsrichtung durchgehendes Stegteil 44e zwischen den Schenkeln 44b und 44d ist mit einer Spule 51 umwickelt. Diese wird im Vergleich mit den Spulen 47 in entgegengesetzter Richtung von Gleichstrom durchflossen, so daß die Schenkel 44d, 44b magnetisch entgegengesetzte Polaritäten aufweisen. Von den Schenkeln 44b, 44d stehen in Längsrichtung abwechselnd Klauen 52 und 53 ab, die abwechselnde magnetische Polaritäten aufweisen und wie die freien Enden der Schenkel 44a, 44b und 44d der Führschiene 45 unter Bildung des Führspalts 46 gegenüberstehen. Die Klauen 52, 53 bilden somit Bremsmagnetpole, die den Bremsmagnetpolen 48, 49 nach Fig. 4 und 5 entsprechen.

Die Erfindung ist nicht auf die beschriebenen Ausführungsbeispiele beschränkt, die auf vielfache Weise abgewandelt werden können. Das gilt insbesondere für die Mittel, mittels derer die Einbauplätze für die Führ- und Bremsmagnete zur Verfügung gestellt werden, sowie für die Größe, Zahl und Ausbildung der im Einzelfall vorgesehenen Führ- und Bremsmagnete. Weiter kann es zweckmäßig sein, die Führ- und/oder Bremsmagnete in mehr als je einer Ebene ausschließlich vorzusehen. Das würde an der erfindungsgemäßen Konstruktion, nach der die Führmagnete ein durchlaufendes Magnetflussband bilden und die Bremskräfte auf mehrere kleinere statt einen großen Bremsmagneten verteilt werden, nichts ändern. Weiter ist klar, dass die Zahl der in Fahrzeuglängsrichtung hintereinander angeordneten Magneteinheiten nicht auf die aus Fig 2 und 3 ersichtlichen Anzahlen beschränkt ist, sondern in weiten Grenzen variiert werden kann. Dasselbe gilt für die Zahl der pro Magneteinheit vorgesehenen Führ- und Bremsmagnete. Außerdem bezieht sich die Erfindung in analoger Weise auch auf Magnetschwebefahrzeuge, die an ihren beiden Seiten mit je einem beschriebenen und im Wesentlichen identisch ausgebildeten Führ- und Bremsmagnetsystem ausgerüstet sind oder bei denen das Führ- und Bremssystem nur längs einer Mittelachse des Fahrzeugs angeordnet wird. Schließlich versteht sich, dass die verschiedenen Merkmale auch in anderen als den beschriebenen und dargestellten Kombinationen angewendet werden können.

## Patentansprüche

1. Magnetschwebefahrzeug mit einer Mehrzahl von in einer Fahrtrichtung (y) aufeinander folgenden Führ- und Bremsmagneten (20 bis 22, 27, 28, 36; 30, 37), wobei Führmagnetspulen (20 bis 22, 27, 28, 36) der Führmagnete in Magneteinheiten (15, 16, 19, 25, 26, 35) untergebracht sind, die zwei zur Aufnahme von Magneten eingerichtete Ebenen aufweisen,
**dadurch gekennzeichnet, dass** die Magneteinheiten (15, 16, 19, 25, 26, 35) in einer Kette hintereinander angeordnet sind, wobei die Führmagnetspulen (20 bis 22, 27, 28, 36) zumindest in einem Bereich zwischen beiden an dem Fahrzeugenden
vorgesehenen Magneteinheiten (15) ausschließlich in einer ersten der beiden Ebenen der Magneteinheiten (15, 16, 19, 25, 26, 35) untergebracht sind und ein über die ganze Fahrzeuglänge erstrecktes Magnetflussband bilden, und daß die Bremsmagnete (30, 37) ausschließlich in der zweiten der beiden Ebenen der Magneteinheiten (15, 16, 19, 25, 26, 35) angeordnet sind.

2. Magnetschwebefahrzeug nach Anspruch 1, **dadurch gekennzeichnet, dass** es wenigstens eine Endsektion mit einem bugseitigen Ende (2) enthält, in dem jeweils eine Magneteinheit (15) vorgesehen ist, die wenigstens einen in der zweiten Ebene angeordneten Führmagneten (20) aufweist.

3. Magnetschwebefahrzeug nach Anspruch 2, **dadurch gekennzeichnet, dass** es aus zwei derartigen Endsektionen (32, 34) zusammengesetzt ist.

4. Magnetschwebefahrzeug nach Anspruch 3, **dadurch gekennzeichnet, dass** es zwischen den beiden Endsektionen (32, 34) wenigstens eine Mittelsektion (33) enthält und die Magneteinheiten (35) der Mittelsektion (33) ein über deren ganze Länge erstrecktes Band von in der ersten Ebene liegenden Führmagnetspulen (36) bilden.

5. Magnetschwebefahrzeug nach Anspruch 3 oder 4, **dadurch gekennzeichnet, dass** in Übergangsbereichen (38) zwischen zwei Sektionen (32, 33 bzw. 33, 34) jeweils eine Magneteinheit (39) mit ausschließlich in der ersten Ebene liegenden Führmagnetspulen (36) vorgesehen ist.

6. Magnetschwebefahrzeug nach einem der Ansprüche 1 bis 4, **dadurch gekennzeichnet, dass** die Bremsmagnete (30, 37) über die ganze Fahrzeuglänge gleichmäßig auf die Magneteinheiten (15, 16, 19, 25, 26, 35) verteilt sind.

7. Magnetschwebefahrzeug nach Anspruch 6, **dadurch gekennzeichnet, dass** in jeder Magneteinheit (16, 19, 26, 25, 35) wenigstens ein Bremsmagnet (30, 37) untergebracht ist.

8. Magnetschwebefahrzeug nach einem der Ansprüche 1 bis 7, **dadurch gekennzeichnet, dass** die Bremsmagnete (30, 37) nur innerhalb von Schwebegestellen (3, 4, 5, 40, 41) angeordnet sind.

9. Magnetschwebefahrzeug nach einem der Ansprüche 1 bis 7, **dadurch gekennzeichnet, dass** die Bremsmagnete (30, 37) nur zwischen Schwebegestellen (3, 4, 5, 40, 41) angeordnet sind.

10. Magnetschwebefahrzeug nach einem der Ansprüche 1 bis 9, **dadurch gekennzeichnet, dass** die beiden Ebenen übereinander angeordnet und die Führmagnetspulen (36) nur in einer oberen oder unteren Ebene der Magneteinheiten (35) untergebracht sind.

11. Magnetschwebefahrzeug nach einem der Ansprüche 1 bis 10, **dadurch gekennzeichnet, dass** die Magneteinheiten (16, 19, 25, 26, 35) baugleich ausgebildet sind und in den beiden Ebenen eine vorgewählte Anzahl von Einbauplätzen (23) für die Führ- und Bremsmagnete (20 bis 22, 27, 28, 36; 30, 37) aufweisen.

12. Magnetschwebefahrzeug nach einem der Ansprüche 1 bis 11 **dadurch gekennzeichnet, daß** die Magneteinheiten (15, 16, 19, 25, 26, 35) in einer ununterbrochenen Kette hintereinander angeordnet sind und die Führmagnetspulen (20 bis 22, 27, 28, 36) ein über die ganze Fahrzeuglänge durchgehendes Magnetflussband bilden.

## Claims

1. A magnetic levitation vehicle having a plurality of guiding and braking magnets (20 to 22, 27, 28, 36; 30, 37) following one another in the direction of travel (y), wherein guiding magnetic coils (20 to 22, 27, 28, 36) of the guiding magnets are housed in magnet units (15, 16, 19, 25, 26, 35) which have two levels set up to receive magnets,
**characterized in that** the magnet units (15, 16, 19, 25, 26, 35) are arranged behind one another in a chain, wherein the guiding magnet coils (20 to 22, 27, 28, 36) are housed at least in a region between two magnet units (15) provided at the vehicle ends exclusively in a first of the two levels of the magnet units (15, 16, 19, 25, 26, 35) and form a magnetic flux strip extending over the entire length of the vehicle and that the braking magnets (30, 37) are arranged exclusively in the second of the two levels of the magnet units (15, 16, 19, 25, 26, 35).

2. The magnetic levitation vehicle according to claim 1, **characterized in that** it contains at least one end section with an end (2) on the front side in which a magnet unit (15) is provided in each case which has at least one guiding magnet (20) arranged in the second level.

3. The magnetic levitation vehicle according to claim 2, **characterized in that** it is made up of two end sections (32, 34) of this kind.

4. The magnetic levitation vehicle according to claim 3, **characterized in that** it contains at least one middle section (33) between the two end sections (32, 34) and the magnet units (35) of the middle section (33) form a strip of guiding magnet coils (36) lying in the first level extending over the entire length thereof.

5. The magnetic levitation vehicle according to claim 3 or 4, **characterized in that** in transitional regions (38) between two sections (32, 33 or 33, 34) a magnet unit (39) is provided in each case with guiding magnet coils (36) lying exclusively in the first level.

6. The magnetic levitation vehicle according to claims 1 to 4, **characterized in that** the braking magnets (30, 37) are evenly distributed over the entire vehicle length on the magnet units (15, 16, 19, 25, 26, 35).

7. The magnetic levitation vehicle according to claim 6, **characterized in that** at least one braking magnet (30, 37) is housed in each magnet unit (16, 19, 26, 25, 35).

8. The magnetic levitation vehicle according to one of claims 1 to 7, **characterized in that** the braking magnets (30, 37) are only arranged within levitation frames (3, 4, 5, 40, 41).

9. The magnetic levitation vehicle according to one of claims 1 to 7, **characterized in that** the braking magnets (30, 37) are only arranged between levitation frames (3, 4, 5, 40, 41).

10. The magnetic levitation vehicle according to one of claims 1 to 9, **characterized in that** the two levels are arranged on top of one another and the guiding magnet coils (36) are only housed in an upper or lower level of the magnet units (35).

11. The magnetic levitation vehicle according to one of claims 1 to 10, **characterized in that** the magnet units (16, 19, 25, 26, 35) have the same structural design and have a preselected number of slots (23) for the guiding and braking magnets (20 to 22, 27, 28, 36; 30, 37) in the two levels.

12. The magnetic levitation vehicle according to one of claims 1 to 11, **characterized in that** the magnet units (15, 16, 19, 25, 26, 35) are arranged in an uninterrupted chain one behind the other and the guiding magnet coils (20 to 22, 27, 28, 36) form a continuous magnetic flux strip over the entire length of the vehicle.

## Revendications

1. Véhicule à sustentation magnétique avec une pluralité d'aimants de guidage et de freinage (20 à 22, 27, 28, 36 ; 30, 37) se succédant dans un sens de la marche (y), des bobines d'aimant de guidage (20 à 22, 27, 28, 36) des aimants de guidage étant logées dans des unités d'aimants (15, 16, 19, 25, 26, 35), qui comportent deux plans agencés pour recevoir des aimants,
**caractérisé en ce que** les unités d'aimants (15, 16, 19, 25, 26, 35) sont disposées l'une derrière l'autre dans une chaîne, les bobines d'aimant de guidage (20 à 22, 27, 28, 36) étant logées exclusivement dans un premier des deux plans des unités d'aimants (15, 16, 19, 25, 26, 35) au moins dans une zone entre les deux unités d'aimants (15) prévues sur les extrémités du véhicule et formant une bande de flux magnétique étendue sur toute la longueur du véhicule et **en ce que** les aimants de freinage (30, 37) sont exclusivement disposés dans le deuxième des deux plans des unités d'aimants (15, 16, 19, 25, 26, 35).

2. Véhicule à sustentation magnétique selon la revendication 1, **caractérisé en ce qu'**il contient au moins une section finale avec une extrémité (2) à l'avant dans laquelle est respectivement prévue une unité d'aimants (15), qui comporte au moins un aimant de guidage (20) disposé dans le deuxième plan.

3. Véhicule à sustentation magnétique selon la revendication 2, **caractérisé en ce qu'**il est composé de deux sections finales (32, 34) semblables.

4. Véhicule à sustentation magnétique selon la revendication 3, **caractérisé en ce qu'**il contient au moins une section centrale (33) entre les deux sections finales (32, 34) et les unités d'aimants (35) de la section centrale (33) forment une bande s'étendant sur toute leur longueur de bobines d'aimant de guidage (36) situées dans le premier plan.

5. Véhicule à sustentation magnétique selon la revendication 3 ou 4, **caractérisé en ce qu'**une unité d'aimants (39) avec des bobines d'aimant de guidage (36) situées exclusivement dans le premier plan est respectivement prévue dans des zones de transition (38) entre les deux sections (32, 33 ou 33, 34).

6. Véhicule à sustentation magnétique selon l'une quelconque des revendications 1 à 4, **caractérisé en ce que** les aimants de freinage (30, 37) sont répartis uniformément sur les unités d'aimants (15, 16, 19, 25, 26, 35) sur toute la longueur du véhicule.

7. Véhicule à sustentation magnétique selon la revendication 6, **caractérisé en ce qu'**au moins un aimant de freinage (30, 37) est logé dans chaque unité d'aimants (16, 19, 26, 25, 35).

8. Véhicule à sustentation magnétique selon l'une quelconque des revendications 1 à 7, **caractérisé en ce que** les aimants de freinage (30, 37) sont disposés uniquement à l'intérieur des postes de sustentation (3, 4, 5, 40, 41).

9. Véhicule à sustentation magnétique selon l'une quelconque des revendications 1 à 7, **caractérisé en ce que** les aimants de freinage (30, 37) sont disposés uniquement entre les postes de sustentation (3, 4, 5, 40, 41).

10. Véhicule à sustentation magnétique selon l'une quelconque des revendications 1 à 9, **caractérisé en ce que** les deux plans sont disposés l'un sur l'autre et les bobines d'aimant de guidage (36) sont uniquement logées dans un plan supérieur ou inférieur des unités d'aimants (35).

11. Véhicule à sustentation magnétique selon l'une quelconque des revendications 1 à 10, **caractérisé en ce que** les unités d'aimants (16, 19, 25, 26, 35) sont constituées de même conception et comportent dans les deux plans un nombre présélectionné d'emplacements de montage (23) pour les aimants de guidage et de freinage (20 à 22, 27, 28, 36 ; 30, 37).

12. Véhicule à sustentation magnétique selon l'une quelconque des revendications 1 à 11, **caractérisé en ce que** les unités d'aimants (15, 16, 19, 25, 26, 35) sont disposées l'une derrière l'autre dans une chaîne ininterrompue et les bobines d'aimant de guidage (20 à 22, 27, 28, 36) forment une bande de flux magnétique traversant toute la longueur du véhicule.
